Europäisches Patentamt

European Patent Office

Office européen des brevets

(11) Veröffentlichungsnummer: **0 193 818**
A1

## EUROPÄISCHE PATENTANMELDUNG

(21) Anmeldenummer: 86102315.8

(22) Anmeldetag: 22.02.86

(51) Int. Cl.⁴: **G 02 B 21/00**, A 61 B 3/00, G 02 B 21/22

(30) Priorität: 02.03.85 DE 3507458

(43) Veröffentlichungstag der Anmeldung: 10.09.86 Patentblatt 86/37

(84) Benannte Vertragsstaaten: **DE FR GB IT**

(71) Anmelder: **Oculus Optikgeräte GmbH, D-6330 Wetzlar 17 (DE)**

(72) Erfinder: **Spitznas, Manfred, Prof. Dr., Sigmund-Freud-Strasse 25, D-5300 Bonn 1 (DE)**
Erfinder: **Reiner, Josef, Prof. Dr., Stefan-Lochner-Strasse 14, D-5038 Rodenkirchen (DE)**
Erfinder: **Veit, Wolfgang, Schützenstrasse 6, D-6336 Solms 1 (DE)**
Erfinder: **Kirchhübel, Rainer, Dipl.-Ing., Freiherr-vom-Stein-Strasse 18, D-6334 Asslar (DE)**

(74) Vertreter: **Missling, Arne, Dipl.-Ing. et al, Patentanwälte Dipl.-Ing. R. Schlee Dipl.-Ing. A. Missling Bismarckstrasse 43, D-6300 Giessen (DE)**

(54) **Stereomikroskop für Operationen.**

(57) Ein Stereomikroskop für die Durchführung von Operationen, insbesondere von Augenoperationen, das eine für beide Strahlengänge gemeinsame Sammellinse und für jeden Strahlengang ein Objektiv und je einen ein Fernrohr bildenden Okulartubus mit zwei Umkehrprismen mit einstellbarem Augenabstand aufweist, hat, um bei einem abgewinkelten Strahlengang mit Hilfe der Panorama-Funduskopie ein aufrechtes und seitenrichtiges Bild zu erzeugen, zwischen dem Objektiv (7) und den die Fernrohre enthaltenden Okulartuben (11, 12) ein eingedrehtes, ungespiegeltes Bild lieferndes und beide Strahlengänge überdeckendes, doppelt brechendes, reflektierendes System (4, 19, 20), das so im Stereomikroskop angeordnet ist, daß dieses gegen ein mit gleicher optischer Weglänge ausgebildetes, beide Strahlengänge überdeckendes 90°-Prisma austauschbar ist.

ACTORUM AG

Beschreibung:

Die Erfindung betrifft ein Stereomikroskop für die
Durchführung von Operationen, insbesondere von Augenoperationen, mit einer für beide Strahlengänge gemeinsamen Sammellinse und für jeden Strahlengang je einem Objektiv, je
einem ein Fernrohr bildenden Okulartubus mit zwei Umkehrprismen mit einstellbarem Augenabstand.

Stereomikroskope der eingangs genannten Art sind bekannt und
werden für Augenoperationen eingesetzt. Zur Sichtbarmachung
des Glaskörperraumes im Augeninneren wird auf die Hornhaut
eine Zerstreuungslinse (Kontaktlinse) aufgesetzt. Eine reflexfreie Beleuchtung wird durch Trennung des Beobachtungs-
und des Beleuchtungsstrahlenganges erreicht, indem der Glaskörperraum durch einen von der Seite an das Auge angesetzten
Kaltlichtleiter ausgeleuchtet wird. Mit Hilfe derartiger
Stereomikroskope und einer im letzten Jahrzehnt entwickelten
Operationstechnik ist es möglich, unter Einsatz feinster
Instrumente Trübungen im Auge auszuräumen (Vitrektomie). Das
Auge hat den Bau einer Hohlkugel. Sein Inneres, der sogenannte Glaskörperraum, ist normalerweise angefüllt mit einer
durchsichtigen, gallertartigen Masse, dem Glaskörper. Vor

- 2 -

dem Glaskörper liegen Hornhaut und Linse, welche gemeinsam mit der Regenbogenhaut (Blende) das optische System des Auges bilden. Durch das optische System werden die vor dem Auge liegenden Gegenstände auf die hinter dem Glaskörper liegende Netzhaut abgebildet. Wenn undurchsichtige Fremdpartikel (z.B. Blut) in den Glaskörperraum eindringen, wird dieser undurchsichtig, so daß die einfallenden Strahlen die Netzhaut nicht mehr erreichen können. Trotz voller Funktionstätigkeit des optischen Systems und der Netzhaut sind solche Augen praktisch blind.

Mit Hilfe der Vitrektomie können derartige Schäden beseitigt werden. Allerdings liefern die bisher zur Verwendung gelangten Kontaktlinsen eine Übersicht von etwa 20$^{\circ}$ (plankonkave Kontaktlinsen) bis maximal 35$^{\circ}$ (bikonkave Kontaktlinsen).

Optisch ist es möglich, den Gesichtsfeldwinkel bis auf 150$^{\circ}$ zu erweitern, was die Operation wesentlich erleichtern würde. Ein derartiges System aus Kontaktoptik und Kugellinse ist aus der Panorama-Funduskopie bekannt. Ein derartiges Gerät wird unter dem Markenzeichen "Panfunduskop" von der Firma Rodenstock in München vertrieben.

Bei der Vitrektomie läßt sich dieser Vorteil jedoch nicht nutzen, da das Bild im Operationsmikroskop umgekehrt und seitenverkehrt erscheint. Manipulationen im Auge sind dadurch gefährlich erschwert und bimanuell unmöglich.

Aus der US-PS 4 015 898 ist ein Ophthalmoskop bekannt, mit dem der Augenhintergrund betrachtet werden kann. In diesem Patent wird vorgeschlagen, für die Invertierung, Reversierung und Trennung der Strahlen ein Uppendahl-Prisma einzusetzen, wodurch ein stereoskopisches, aufrechtes, inreversiertes Bild der Netzhaut beobachtet werden kann. Die Verwendung eines Uppendahl-Prismas setzt jedoch voraus, daß hier die Betrachtung des Auges in einem geraden, nicht abgeknickten Strahlengang erfolgt, d.h. das Auge des Betrachters muß immer geradlinig über der zu betrachtenden Fläche liegen. Bei einem Stereomikroskop hingegen ist ein abgeknickter Strahlengang gegeben, d.h. der Betrachter sieht schräg in das Stereomikroskop hinein, was für Operationen am Auge unerläßlich ist, denn allein hierdurch ist ein müheloses Arbeiten und Operieren gewährleistet, da ansonsten die Haltung des Operateurs unnatürlich wäre und, was noch erschwerend hinzukommt, der Abstand vom Auge des Operateurs zum zu behandelnden Objekt zu groß wird.

Der Erfindung liegt die Aufgabe zugrunde, ein Stereomikroskop mit abgewinkeltem Strahlengang der eingangs genannten Art so auszubilden, daß das mit Hilfe der Panorama-Funduskopie erhaltene Bild aufrecht und seitenrichtig dem Betrachter erscheint.

Diese Aufgabe wird mit den Merkmalen des Anspruches 1 gelöst.

Der Strahlengang ist zwischen dem Objektiv und den beiden Prismenfernrohren parallel, so daß in gewissen Grenzen der Abstand dieser Elemente voneinander verändert werden kann, ohne daß der Strahlengang des Mikroskops hinsichtlich der Vergrößerung und dem Gesichtsfeld wesentlich beeinträchtigt wird. Das gleiche gilt auch, wenn noch ein Vergrößerungswechsler zwischen der Sammellinse und dem Objektiv eingeschaltet ist. Hierdurch ist es möglich, in diesem parallelen
Strahlengang ein optisches Element vorzusehen, das das Bild
aufrichtet und seitenrichtig stellt und das die Abknickung
des Strahlenganges gewährleistet. Es ist nicht ausreichend,
diese Ausrichtung und Seitenrichtigstellung für jedes Okular
getrennt vorzunehmen, sondern zur Vermeidung eines pseudostereoskopischen Effektes muß gleichzeitig auch eine Vertauschung der Strahlengänge der beiden Mikroskophälften erfolgen. Zur Erzielung eines gedrehten, ungespiegelten Bildes
dient gemäß der Erfindung entweder ein 90°-Reflektionsprisma
mit einem Dachflächenpaar oder aber ein aus zwei winklig
zueinander angeordneten und fixierten Spiegeln gebildetes
System. Diesem System wird der vom Objektiv kommende Strahlengang zugeleitet und entsprechend reflektiert, wobei das
reflektierende System so angeordnet ist, daß der Strahlengang um den gewünschten Winkel abgelenkt wird, der für das
spezielle Stereomikroskop, insbesondere für ein Operationsmikroskop, für ein ergonomisches Arbeiten benötigt wird.
Damit mit einem erfindungsgemäß ausgebildeten Stereomikroskop auch normal, d.h. ohne die Funduskopielinsen gearbeitet
werden kann und auch dann ein aufrechtes, seitenrichtiges
Bild erhalten wird, wird das zusätzlich eingefügte doppelt
brechende, reflektierende System durch ein wiederum beide
Strahlengänge überdeckendes 90°-Prisma ausgetauscht, das die
gleiche optische Weglänge besitzt wie das doppelt brechende,
reflektierende System. Hierdurch ist gewährleistet, daß beim
Auswechseln der reflektierenden Systeme keine erneute
Scharfstellung des Stereomikroskops vorgenommen zu werden
braucht. Eine derartige Austauschbarkeit der Systeme, die
vorteilhaft in einfacher Weise dadurch vorgenommen wird, daß beide Systeme auf einem gemeinsamen Schlitten angeordnet sind, ist deshalb erforderlich, weil gerade bei Augenoperationen eine entsprechende Umkehr des Bildes benötigt wird, je nachdem ob vor oder hinter der Augenlinse gearbeitet wird.

Ein Ausführungsbeispiel der Erfindung ist im folgenden anhand der Zeichnung näher beschrieben, in dieser zeigen:

Fig. 1    in Vorderansicht und in Seitenansicht schema-
und 2     tisch den Aufbau eines Stereomikroskops mit
          einem in den Strahlengang des mikroskopisch
          eingeschobenen 90°-Reflektions-Prisma,

Fig. 3    in perspektivischer Ansicht das 90°-
          Reflektions-Prisma,

Fig. 4    in Draufsicht und in Seitenansicht in sche-
und 5     matischer Darstellung den Strahlengang eines
          Stereomikroskops mit einem in den Strahlengang eingeschobenen reflektierenden System
          aus zwei winklig zueinander angeordneten
          Spiegeln,

Fig. 6    in perspektivischer Darstellung ein erfindungs-
          gemäßes Stereomikroskop entsprechend dem
          Aufbau nach Fig.4 und 5 und

- 6 -

Fig. 7   in Ansicht und in Seitenansicht den Strahlen-
und 8   gang des erfindungsgemäß ausgebildeten Stereo-
        mikroskops nach den Fig.1 bis 6 mit einem
        das reflektierende System ersetzenden
        Reflektionsprisma.

In den Figuren ist mit 1 das Stereomikroskop insgesamt
bezeichnet. Unter dem Mikroskop ist eine Kugellinse 2, die
zusammen mit einer auf das Auge 3 aufgesetzten Kontaktlinse
die Funduskopie-Einrichtung bildet. Hierdurch wird der Gesichtsfeldwinkel des Stereomikroskops, der normalerweise bis
zu 30° beträgt, auf 150° erweitert, was einen erheblich
größeren Überblick bei Beobachtungen im Auge bedeutet.

Das Stereomikroskop 1 hat bis auf das in den parallelen
Strahlengang des Mikroskops eingefügte 90°-Reflektionsprisma
4 mit einem Dachflächenpaar einen konventionellen Aufbau.
Die Sammellinse 7 des Stereomikroskops 1 ist beiden Strahlengängen 8, 9 gemeinsam. Der Sammellinse ist für jeden
Strahlengang ein Vergrößerungswechsler 6 nachgeschaltet, mit
dem in einfacher Weise die Vergrößerung des Stereomikroskops
1 einstellbar ist. Dieser Vergrößerungswechsler ist konventioneller Art und kann als Walzenwechsler ausgebildet
sein. Dem Vergrößerungswechsler 6 ist in bekannter Weise in
jedem Strahlengang 8, 9 eine Objektivlinse 10 nachgeschaltet. Die beiden Okulartuben 11, 12 bilden ein Fernrohrsystem
mit jeweils drei Linsen, 13, 14, zwischen denen Umlenkprismen 15, 16 zugeordnet sind. Der Aufbau der Okulartuben 11,
12 ist herkömmlicher Art.

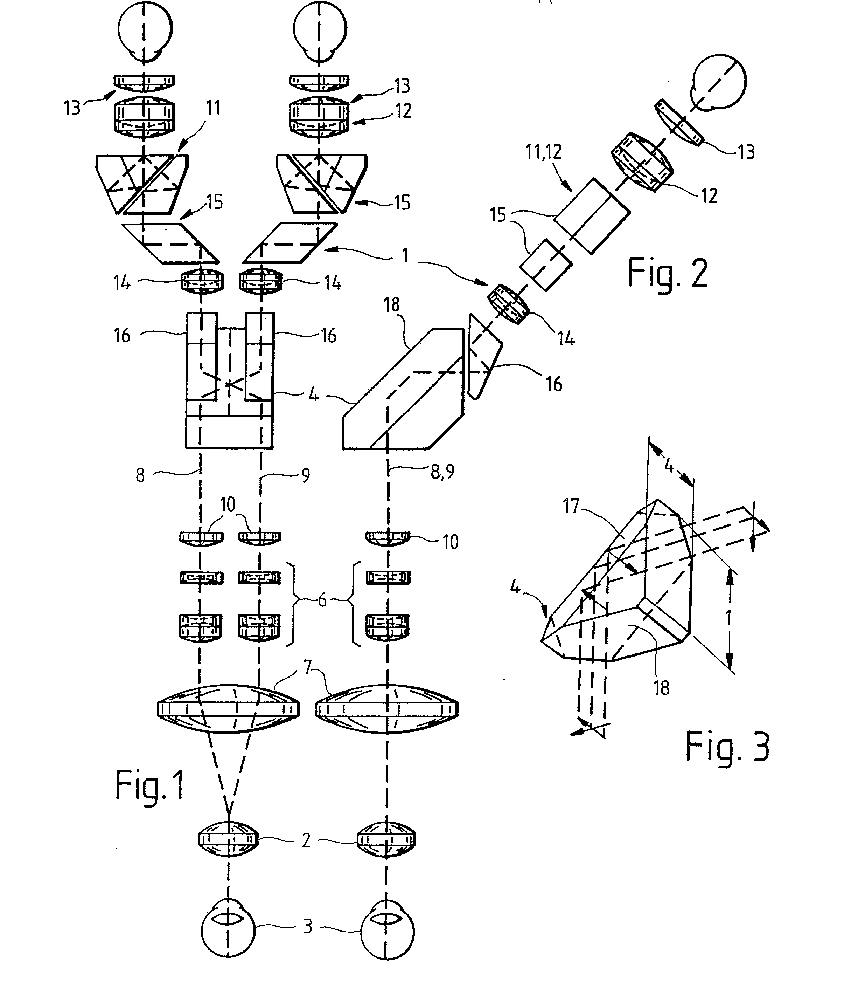

Bei dem erfindungsgemäßen Stereomikroskop wurde gegenüber
einem herkömmlichen Stereomikroskop der Abstand zwischen dem
Vergrößerungswechsler 6 sowie den beiden Okulartuben 11, 12
vergrößert und das Reflektionsprisma 4 gemäß Fig. 3 mit
seinen beiden Dachflächen 17, 18 eingefügt. Dieses 90°-
Reflektionsprisma ergibt ein gedrehtes, ungespiegeltes Bild,
das in die Okulartuben 11, 12 eingespiegelt wird, die, wie
Fig. 2 zeigt, in einem Winkel zum Strahlengang 8, 9 angeordnet sind. Für Operationsstereomikroskope ist diese Abwicklung unbedingt erforderlich, da dann nur in ergonomischer
Hinsicht in einwandfreier Weise die Operation durchgeführt
werden kann. Der Austausch des Prismas 4 durch ein anderes
Prisma, das keine Strahlenablenkung in einem bestimmten
Winkel zuläßt, ist für den genannten Einsatzzweck nicht zu
verwenden.

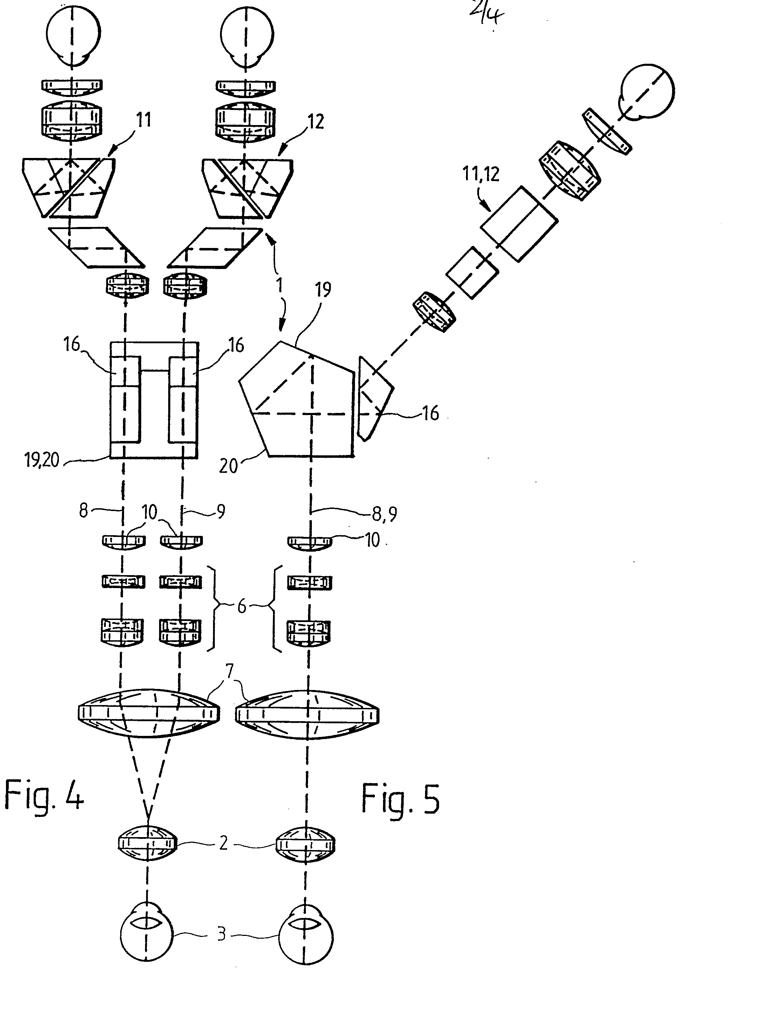

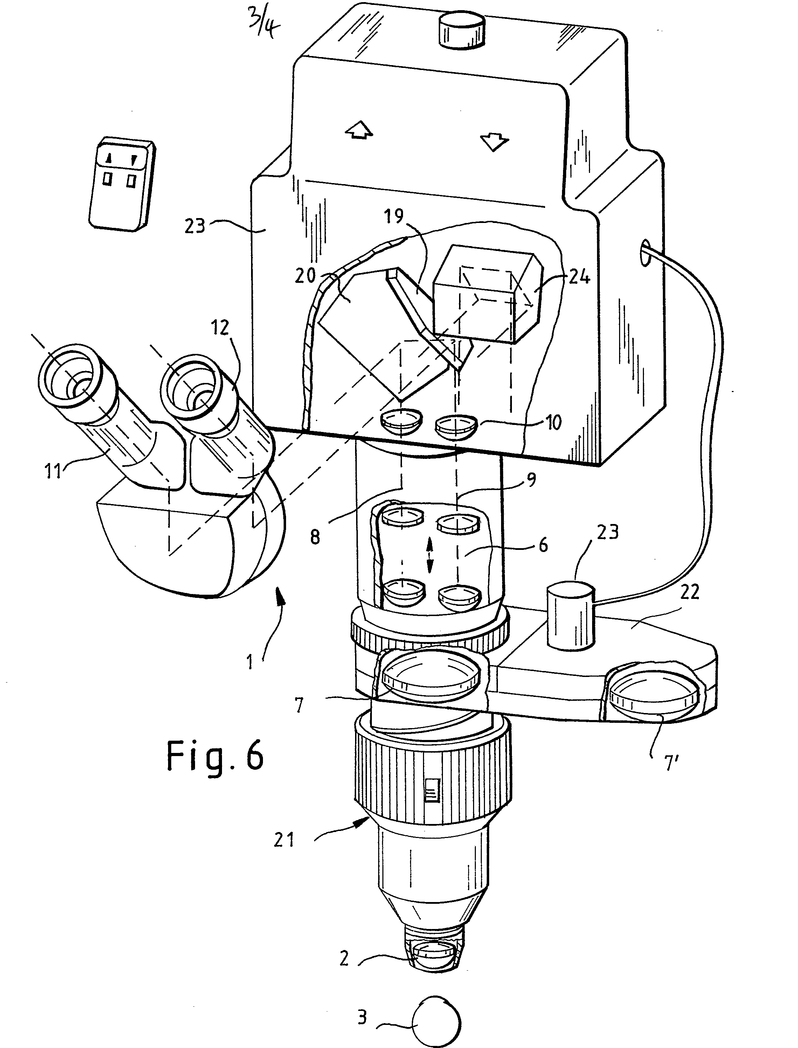

In den Fig. 4 und 5 ist das gleiche Stereomikroskop in
Ansicht und Seitenansicht gezeigt, wobei dessen grundsätzlicher Aufbau dem des Stereomikroskops nach Fig. 1 und 2
entspricht. Gleiche Teile sind hier mit gleichen Bezugszeichen versehen. Der Unterschied zu dem Ausführungsbeispiel
nach Fig. 1 und 2 besteht darin, daß hier anstelle eines
90°-Reflektionsprismas mit Dachkanten zwei Spiegel 19, 20 in
den Strahlengang 8, 9 eingeschaltet sind, die das geforderte
gedrehte, ungespiegelte Bild liefern, das dann in die Okulartuben 11, 12, die wiederum in einem Winkel zum Strahlengang 8, 9 angeordnet sind, eingeleitet wird. Die Funktionsweise dieses Stereomikroskops ist die gleiche wie die nach
den Fig. 1 und 2 beschriebene. In Fig. 6 ist in schematisierter und perspektivischer Darstellung ein Stereomikroskop
entsprechend Fig. 4 und 5 dargestellt. Bei diesem Stereomi-

kroskop sind gleiche Teile mit gleichen Bezugszeichen versehen. Der Unterschied zu der Prinzipskizze nach den Fig. 3
und 4 besteht darin, daß die Sammelllinse 7 und die Linse 2
in einem Gehäuse 21 angeordnet sind, das zum einen eine
Verschiebung der Linse 2 relativ zur Sammellinse 7 gestattet
und das zum anderen auf einem Träger 22 befestigt ist,
welcher um eine Achse 23 schwenkbar ist, so daß die Weitwinkeleinrichtung 21 bei Nichtgebrauch durch die für die Beobachtung des Augenvordergrundes benötigte Sammellinse 7 durch
einfaches Verschwenken austauschbar ist.

Im Gehäuse 23 des Stereomikroskops ist das doppelt brechende
Spiegelsystem 19, 20 angeordnet. Dieses doppelt brechende
Spiegelsystem 19, 20 sitzt auf einem nicht dargestellten
Schlitten, zusammen mit einem Pentagonalprisma 24, das dem
Spiegelsystem 19, 20 so angepaßt ist, daß die Strahlen 8, 9
im Spiegelsystem 19, 20 wie auch im Pentagonalprisma 24 den
gleichen optischen Weg zurücklegen. Falls das Stereomikroskop nicht zur Operation des Augenhintergrundes verwendet
werden soll, sondern zu anderweitigen Operationen oder aber
für Eingriffe vor der Augenlinse, dann wird, um hier wiederum ein aufrechtes Bild zu erhalten, das Spiegelsystem 19, 20
aus dem Strahlengang 8, 9 herausgefahren und das Pentagonalprisma an die Stelle des Spiegelsystems 19, 20 gefahren.
Dieser Wechsel muß bei Augenoperationen öfter durchgeführt
werden, da der Eingriff zunächst an der Augenperipherie
stattfindet und erst dann der Augenhintergrund operiert
wird. Dadurch, daß sowohl das Pentagonalprisma 23 wie auch
das Spiegelsystem 19, 20 und auch das $90^{\circ}$-Reflektionsprisma

mit Dachflächenpaar 17, 18 den gleichen optischen Weg aufweist, ist bei einem Austausch der Spiegelsysteme gewährleistet, daß das erhaltene Bild sofort wieder scharf ist, so
daß Nachstellarbeiten zur Scharfjustierung entfallen.

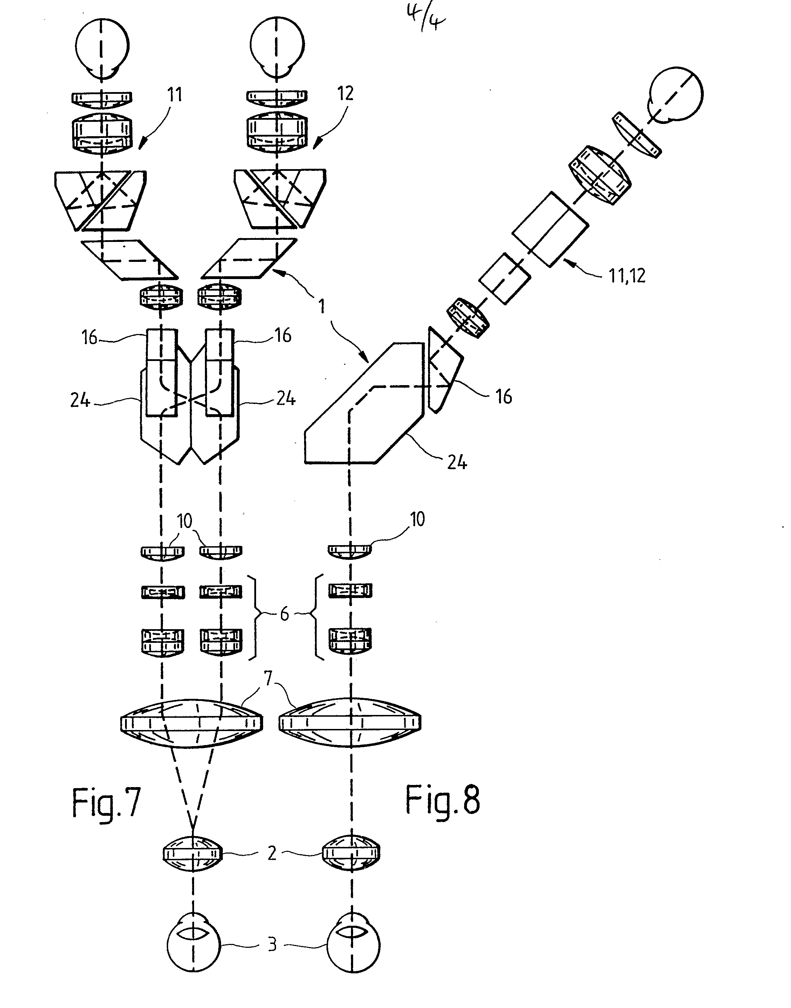

In den Fig. 7 und 8, die ein Stereomikroskop entsprechend
Fig. 1 und 2 bzw. Fig. 4 bis 6 zeigen, sind der schematische
Aufbau des Stereomikroskops und der Strahlengang nach dem
Einschieben des Pentagonalprismas 24 in den Strahlengang
dargestellt.

Gießen, den 12. 2.1986
86047PM


OCULUS Optikgeräte GmbH
6330 Wetzlar 17

Stereomikroskop für Operationen

Patentansprüche:

1. Stereomikroskop für die Durchführung von Operationen, insbesondere von Augenoperationen, mit einer für beide Strahlengänge gemeinsamen Sammellinse und für jeden Strahlengang je einem Objektiv, je einem ein Fernrohr bildenden Okulartubus mit zwei Umkehrprismen mit einstellbarem Augenabstand, dadurch gekennzeichnet, daß zwischen dem Objektiv (7) und den die Fernrohre enthaltenden Okulartuben (11, 12) ein ein gedrehtes, ungespiegeltes Bild lieferndes und beide Strahlengänge überdeckendes, doppelt brechendes, reflektierendes System (4, 19, 20) eingesetzt ist und daß das reflektierende System (4, 19, 20) so im Stereomikroskop angeordnet ist, daß dieses gegen ein mit gleicher optischer Weglänge ausgebildetes, beide Strahlengänge überdeckendes 90°-Prisma austauschbar ist.

2. Stereomikroskop nach Anspruch 1, dadurch gekennzeichnet, daß das reflektierende System (4) ein 90°-Reflektionsprima mit Dachflächenpaar (17, 18) ist.

3. Stereomikroskop nach Anspruch 1, dadurch gekennzeichnet, daß das reflektierende System (19, 20) aus zwei winklig zueinander angeordneten und fixierten Spiegeln besteht.

4. Stereomikroskop nach einem der Ansprüche 1 bis 3, dadurch gekennzeichnet, daß das reflektierende System (4, 19, 20) und das 90°-Prisma auf einem gemeinsamen, verschiebbar im Stereomikroskop gelagerten Schlitten angeordnet sind.

5. Stereomikroskop nach einem der Ansprüche 1 bis 4, dadurch gekennzeichnet, daß ein Vergrößerungswechsler (6) zwischen der Sammellinse (7) und den Objektivlinsen (10) eingesetzt ist.

Fig. 1

Fig. 2

Fig. 3

Fig. 4

Fig. 5

Fig. 6

11

12

1

16          16

24          24

16

24

10        10

6

7

Fig.7

Fig.8

11,12

2

3

Europäisches
Patentamt

EUROPÄISCHER RECHERCHENBERICHT

0193818
Nummer der Anmeldung

EP 86 10 2315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 090 982 (FIRMA CARL ZEISS)<br>* Seite 1, Zeilen 3-13; Seite 2, Zeilen 31-36; Figuren 1,2 * | 1,2,4 | G 02 B 21/00<br>A 61 B 3/00<br>G 02 B 21/22 |
| A | CH-A- 560 908 (WILD HEERBRUGG A.G.)<br>* Spalte 1, Zeilen 15-18,42-46; Spalte 2, Zeilen 25-28; Figuren 1,5 * | 1,2 | |
| A | US-A-4 009 930 (K. ABE et al.)<br>* Insgesamt * | 1,2,4 | |
| A | GB-A- 843 888 (AMERICAN OPTICAL CO.)<br>* Insgesamt * | 1,2,4 | |
| A | US-A-3 909 106 (R. BUHLER)<br>* Insgesamt * | | |

RECHERCHIERTE SACHGEBIETE (Int. Cl.4)

G 02 B 21/00
A 61 B 3/00
A 61 F 9/00

Der vorliegende Recherchenbericht wurde für alle Patentansprüche erstellt.

| Recherchenort | Abschlußdatum der Recherche | Prüfer |
|---|---|---|
| DEN HAAG | 16-05-1986 | WESBY P.B. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82